# EUROPEAN PATENT SPECIFICATION

(11) **EP 3 832 979 B1**
(45) Date of publication and mention of the grant of the patent: **26.01.2022**
(21) Application number: 21153849.1
(22) Date of filing: 22.08.2019
(51) Int. Cl.: H04L 29/06, H04L 29/08, H04L 1/00, H04W 4/44

(54) **PARTITIONED WIRELESS COMMUNICATION SYSTEM WITH REDUNDANT DATA LINKS AND POWER LINES**
PARTITIONIERTES DRAHTLOSKOMMUNIKATIONSSYSTEM MIT REDUNDANTEN DATENVERBINDUNGEN UND STROMLEITUNGEN
SYSTÈME DE COMMUNICATION SANS FIL CLOISONNÉ À LIAISONS DE DONNÉES ET LIGNES ÉLECTRIQUES REDONDANTES

(30) Priority: 27.08.2018 US 201862723448 P; 19.10.2018 DK PA201870684
(43) Date of publication of application: 09.06.2021
(62) Divisional of application: 19193180.7
(73) Proprietor: Aptiv Technologies Limited, St. Michael (BB)
(72) Inventor: BAUER, Lee, Troy, MI Michigan 48098 (US); BORNEMANN, Martin, 90489 Nürnberg (DE); SCHÄFER, Christian, 44879 Bochum (DE)
(74) Representative: Manitz Finsterwald Patent- und Rechtsanwaltspartnerschaft mbB

(56) References cited:
- US-A1- 2009 034 540
- US-A1- 2017 055 104
- US-A1- 2017 366 430
- US-A1- 2018 086 210

## Description

### TECHNICAL FIELD

This disclosure relates generally to vehicular wireless communication systems.

### BACKGROUND

Conventional vehicular wireless communication systems are usually assembled in a crash-safe area of the vehicle or in an area close to vehicle antennas. If the systems are assembled in the crash-safe areas, high-frequency wiring harnesses are needed to connect the systems to antennas. If the systems are assembled in areas close to vehicle antennas, such as vehicle roofs, the systems can be exposed to high temperatures.

### SUMMARY

The invention is defined by the appended independent claims. Further detailed embodiments are defined in the dependent claims for a partitioned wireless communication system with redundant data links and power lines.

The details of the disclosed implementations are set forth in the accompanying drawings and the description below. Other features, objects, and advantages are apparent from the description, drawings, and claims.

### DESCRIPTION OF DRAWINGS

FIG. 1 is a block diagram of a conventional vehicular wireless communication unit, according to an embodiment.
FIG. 2 is a block diagram of a partitioned vehicular wireless communication system with redundant internal data links and power lines, according to an embodiment.
FIG 3 is an example process for selecting a redundant data link or power line in the partitioned wireless communication system of FIG. 2 to transfer data or power, respectively, according to an embodiment.

The same reference symbol used in various drawings indicates like elements.

### DETAILED DESCRIPTION

Reference will now be made in detail to embodiments, examples of which are illustrated in the accompanying drawings. In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the disclosed embodiments.

In the following description, for the purposes of explanation, numerous specific details are set forth to provide a thorough understanding of the disclosed embodiments. It will be apparent, however, that the disclosed embodiments may be practiced without these specific details. In other instances, well-known structures and devices are shown in block diagram form to avoid unnecessarily obscuring the disclosed embodiments.

In the drawings, specific arrangements or orderings of schematic elements, such as those representing devices, modules, instruction blocks and data elements, are shown for ease of description. However, it should be understood by those skilled in the art that the specific ordering or arrangement of the schematic elements in the drawings is not meant to imply that a particular order or sequence of processing, or separation of processes, is required. Further, the inclusion of a schematic element in a drawing is not meant to imply that such element is required in all embodiments or that the features represented by such element may not be included in or combined with other elements in some embodiments.

Further, in the drawings, where connecting elements, such as solid or dashed lines or arrows, are used to illustrate a connection, relationship or association between or among two or more other schematic elements, the absence of any such connecting elements is not meant to imply that no connection, relationship or association can exist. In other words, some connections, relationships or associations between elements are not shown in the drawings so as not to obscure the disclosure. In addition, for ease of illustration, a single connecting element is used to represent multiple connections, relationships or associations between elements. For example, where a connecting element represents a communication of signals, data or instructions, it should be understood by those skilled in the art that such element represents one or multiple signal paths (e.g., a bus), as may be needed, to affect the communication.

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

Several features are described hereafter that can each be used independently of one another or with any combination of other features. However, any individual feature may not address any of the problems discussed above or might only address one of the problems discussed above. Some of the problems discussed above might not be fully addressed by any of the features described herein. Although headings are provided, information related to a particular heading, but not found in the section having that heading, may also be found elsewhere in the specification.

### Problem Overview

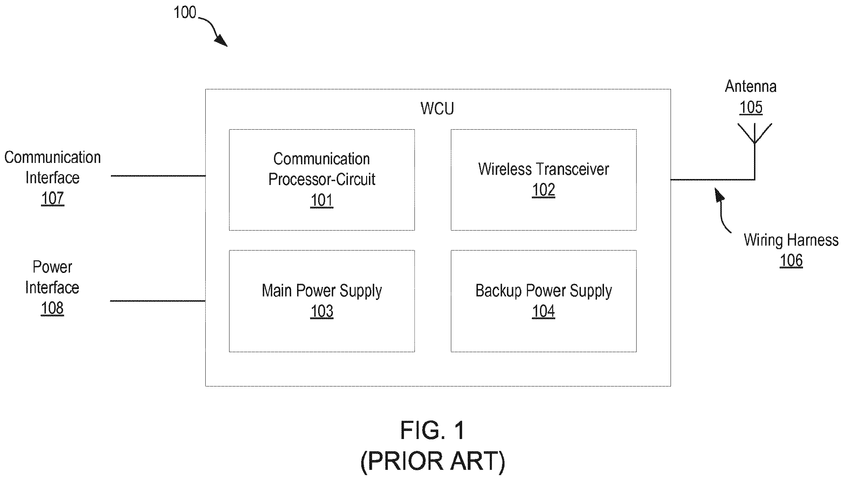

FIG. 1 is a block diagram of a conventional vehicular wireless communication unit (WCU) 100, according to an embodiment. WCU 100 includes communication processor-circuit 101, wireless transceiver 102, main power supply 103 and backup power supply 104 (hereafter also referred to as "WCU components"). Wireless transceiver 102 is coupled to antenna 105 through wiring harness 106. Some examples of wiring harness 106 include but are not limited to: unshielded twisted pairs, shielded twisted pairs, coaxial cables, unshielded parallel pairs, shielded parallels and optical media, or any combination thereof.

WCU 100 provides wireless services (e.g., Internet connectivity, Vehicle-to-Vehicle (V2V) communications) with remote devices and resources external to the vehicle. WCU 100 can be included in any type of vehicle, including an autonomous vehicle. As used herein, "vehicle" includes means of transposition of goods or people. For example, cars, buses, trains, airplanes, drones, trucks, boats, ships, submersibles, dirigibles, mobile robots, etc. A driverless car is an example of an AV. As used herein, an autonomous vehicle (AV) is a vehicle that possesses autonomous capability. As used herein, the term "autonomous capability" refers to a function, feature, or facility that enables a vehicle to be partially or fully operated without real-time human intervention, including without limitation fully autonomous vehicles, highly autonomous vehicles, and conditionally autonomous vehicles.

Communication processor-circuit 101 is coupled to communication interface 107 to receive data from a vehicle data network. For example, communication interface 107 can include circuitry for coupling to one or more vehicle bus systems, including but not limited to: Controller Area Network (CAN) bus, Local Internet Network (LIN), FlexRay, Ethernet, etc. The data can include but is not limited to the status of various vehicle components, sensor data and a perception of the vehicle's surrounding environment as captured by the vehicle's sensors (e.g., object detection data). The vehicle can include one or more sensors to detect passenger presence, airbag activation, tire pressure, vehicle location, road condition, etc., and output sensor data to the data network. Communication processor-circuit 101 analyzes the data and establishes a wireless communication session with a respondent external to the vehicle to receive the data. For example, if the data indicates that an airbag has activated and there are multiple passengers present in the vehicle, communication processor-circuit 101 initiates an emergency call to an eCall emergency alert system.

Wireless transceiver 102 includes circuitry (e.g., a wireless receiver and transmitter) and software/firmware (e.g., a TCP/IP stack) to establish and maintain a bidirectional communication channel with one or more respondents. For example, wireless transceiver 102 can set-up a real-time voice/video channel with an emergency call center that allows passengers in the vehicle to communicate with emergency call center personnel.

Main power supply 103 supplies power to WCU 100 to ensure proper functioning of WCU components. In an example, main power supply 103 draws power from a vehicle power network using power interface 108, monitors input/output voltage and/or current levels of WCU components and adjusts power delivery to each WCU component. In case of an emergency, main power supply 103 may stop functioning due to a loss of connection to the vehicle power network. Additionally, it may be unsafe for main power supply 103 to continue drawing power from the vehicle power network due to a risk of damage to the vehicle. In these cases, backup power supply 104 allows WCU 100 to continue functioning after main power supply 103 is disabled. For example, a battery interruption system (e.g., power switches, fuses) in WCU 100 can be configured to disconnect main power supply 103 from power interface 112 and use backup power supply 104 to power WCU components in the event of an emergency.

In one embodiment, WCU 100 is installed in a crash-safe area in the vehicle to reduce the likelihood of component damage in case of an accident. For example, WCU 100 can be installed in a passenger area, such as the space between the front and the back seats. Antenna 105, on the other hand, is usually installed on top of the vehicle roof to maximize signal strength. As a result, wiring harness 106 is used to couple antenna 105 to WCU 100 at wireless transceiver 102. This configuration, however, incurs an extra cost due to the requirement of wiring harness 106 and introduces signal interference due to the distance between antenna 105 and wireless transceiver 102. In another embodiment, WCU 100 is installed proximate to antenna 105 to reduce the length of wiring harness 106. For example, WCU 100 can be installed under the vehicle roof in a region proximate to antenna 105. In this configuration, however, WCU 102 is susceptible to temperature damage as the vehicle roof can become a heated environment.

### Partitioned Wireless Communication System

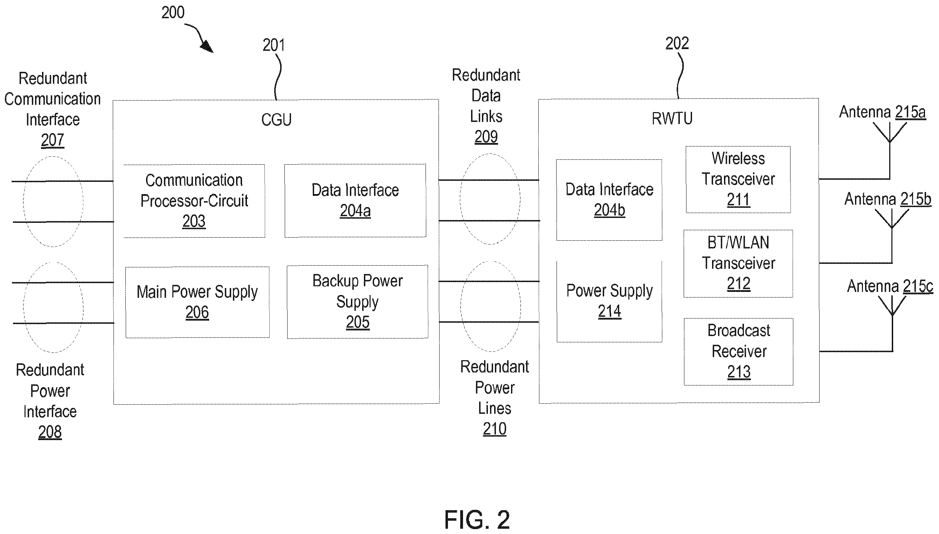

FIG. 2 is a block diagram of partitioned vehicular wireless communication system (PWCS) 200 with redundant data links 209 and redundant power lines 210, according to an embodiment. As used herein, the term "partitioned" means to divide into parts. For example, a single hardware communication unit can be "partitioned" into two physically separate hardware units that are coupled together by data links and power lines and placed at different locations in a vehicle.

In the embodiment shown, PWCS 200 includes communication gateway unit (CGU) 201 coupled to remote wireless transceiver unit (RWTU) 202 by redundant data links 209 and redundant power lines 210. CGU 201 and RWTU 202 are placed at different locations in the vehicle. For example, CGU 201 can be placed at a lower area of the vehicle and RWTU 202 can be placed underneath the vehicle roof proximate to antennas 215a-215c. In an embodiment, each of CGU 201 and RWTU 202 include a housing that covers one or more integrated circuit chips or chipsets for wireless communications data interfaces and power. Any number or type of transmitter, receiver or transceiver, and any number or type of antennas 215a-215c (e.g., omnidirectional, directional, MIMO, antenna arrays) can be included in, or coupled to RWTU 202. One or more of antennas 215a-215c can be configurable, such that the antenna beams can be pointed in any desired direction manually or automatically. Multiple cellular antennas can be used for network connectivity, a global navigation satellite system (GNSS) antenna for navigation to emergency call systems and other location-based applications, satellite radio, radar, AM/FM radio, WiFi hotspot connectivity and dedicated short-range communications (DSRC) for vehicle-to-vehicle/infrastructure applications.

In the example shown, CGU 201 includes communication processor-circuit 203 (e.g., a central processing unit, controller, ASIC), data interface 204a, main power supply 206 and backup power supply 205. Data interface 204a includes circuitry (e.g., amplifiers, buffers, processors) for coupling CGU 201 to redundant data links 209. CGU 201 is further coupled to redundant communication interface 207 for interfacing with a dual-ring data network (e.g., a self-healing dual-ring network) in the vehicle. CGU 202 is further coupled to redundant power interface 208 for interface with a dual-ring power network in the vehicle.

CGU 201 is responsible for analyzing vehicle data and routing data and power to the RWTU 202. In an embodiment, communication processor-circuit 203 can receive vehicle data from redundant communication interface 207 coupled to the vehicle's data network. Main power supply 206 can draw power from redundant power interface 208 coupled to the vehicle's power network. In case of a data and/or power loss or disruption, redundant communication interface 207 and redundant power interface 208 select a different wiring path to deliver data and/or power to CGU 201.

RWTU 202 includes data interface 204b, cellular wireless transceiver 211, WLAN transceiver 212 (e.g., Bluetooth (BT), WiFi), broadcast receiver 213 (e.g., AM/FM radio, satellite radio) and power supply 214. Data interface 204b includes circuitry for coupling RWTU 202 to redundant data links 209. Wireless transceiver 211 can support multiple communication standards, including but not limited to: FM, AM, DAB, Sirius XM, Bluetooth, Wireless LAN, 4G/5G, DSRC, etc. Compared to WCU 100 shown in FIG. 1, PWCS 200 has an optimized structure that partitions communication processor-circuit 203 from wireless transceiver 211. As a result, RWTU 202 is mounted in close proximity to antennas 215a-215c to reduce the cost due to the use of wiring harness 109. In an embodiment, RWTU 202 can be mounted underneath the vehicle roof.

In an embodiment, CGU 201 is coupled to RWTU 202 at data interfaces 204a and 204b. The coupling can be implemented using high-speed redundant data links 209. In case one of the data links suffers a loss or disruption, data interfaces 204a and 204b collectively select a different data link to transfer data. Some examples of data interfaces include but are not limited to: Ethernet, HDBaseT and PCIe. Some examples of data links include but are not limited to: unshielded twisted pairs, shielded twisted pairs, coaxial cables, unshielded parallel pairs, shielded parallels and optical media.

In an embodiment, main power supply 206 of CGU 201 receives power from a vehicle power network at redundant power interface 208 and delivers power to RWTU 202 using redundant power lines 210. For example, each of redundant power lines 210 can take a different wiring path in the vehicle. If one of the power lines suffers a loss or disruption, main power supply 206 selects a different power line to deliver power to power supply 214 of RWTU 202. Similarly, backup power supply 205 can be coupled to power supply 214 using redundant power lines 210.

In an embodiment, redundant data links 209 and redundant power lines 210 are routed in the vehicle to facilitate inspection and replacement. For example, each data link can be located along a path in the vehicle with a power line. In another example, one wiring harness can deliver both power and vehicle data.

In an embodiment, RTWU 202 is an expandable and can function with additional wireless communication protocols or standards. For example, RTWU 202 can include IC sockets (e.g., for receiving dual in-line packages) to allow new chips to be added to support new or updated wireless communication protocols or standards. In an embodiment, antennas 215a-215c can be reconfigured to couple to the additional wireless transceivers to communicate with other devices external to the vehicle using the added or updated communication standards.

### Example Process

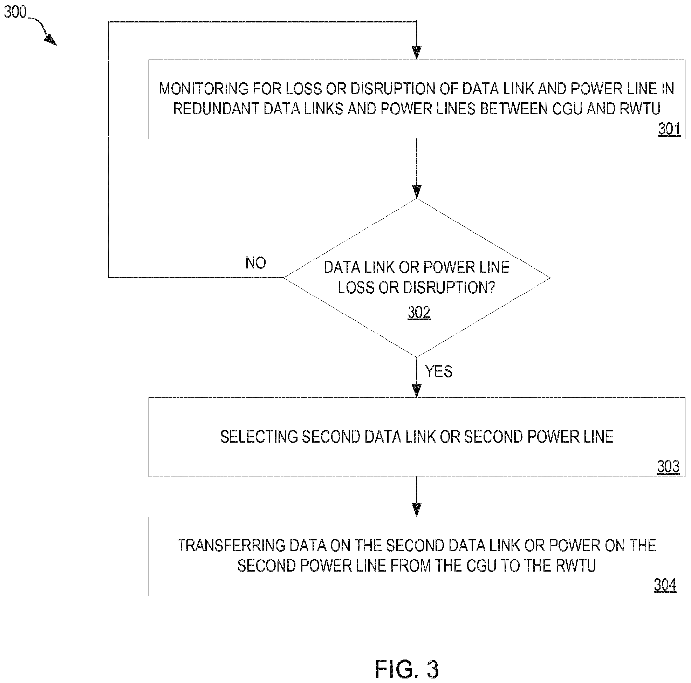

FIG. 3 is a flow diagram of process 300 for using redundant data links and power lines in a wireless communication system to transfer data and power, respectively, from a CGU (e.g., CGU 201) to a RWTU (e.g., RWTU 202), according to an embodiment. Process 300 can be implemented using hardware (e.g., central processing unit (CPU), controller, ASIC), software, firmware or any combination thereof.

Process 300 begins by monitoring for loss or disruption (e.g., reduction in quality of service (QoS)) of a first data link and first power line of redundant data links or power lines, respectively, coupling a CGU and RWTU in a vehicle (301). For example, a loss or disruption of a first data link between the CGU and RWTU can be due to an accident that physically damages the first data link. Data interfaces in the CGU and RWTU include circuitry that monitor data traffic on the first data link and report any detected loss or disruption to a communication processor-circuit in the CGU. For example, if a data interface in the CGU stops receiving data from a data interface in the RWTU for a specified period of time, or there is reduction in data rate, an increase in data error and/or reduction in QoS, the data interface in the CGU can report the data loss or disruption to the communication processor-circuit. In an embodiment, monitoring includes port mirroring with a network switch to send a copy of network packets seen on one switch port to a network monitoring connection on another switch port.

Process 300 continues by determining (302) if there is loss or disruption of the first data link or first power line based on the monitoring. In accordance with the determination of a first data link loss or disruption, process 300 continues by selecting a second data link for data transfer between the CGU and RWTU (303). For example, in response to the reported potential disruption of the first data link, the communication processor-circuit and/or data interface circuitry in the CGU selects a second data link to transfer data to the RWTU. The communication processor-circuit and/or data interface circuity can first verify that the first data link has been lost or disrupted. For example, the communication processor-circuit and/or data interface circuitry can cause test data to be transferred between the two data interfaces in the CGU and RWTU, and if the test data transfer fails, the communication processor-circuit and/or data interface in the CGU selects the second data link for data transfer between the CGU and RWTU.

If there is more than one redundant data link, selection can be based on ranking criteria, where a next highest-ranked data link can be selected for data transfer in place of the first data link. Any desired ranking criteria can be used, such as availability (operational) and electrical or performance characteristics of the data links (e.g., bandwidth, data rate).

In an embodiment, switching from the first data link to the second data link can be accomplished through one or more managed (e.g., smart switches) or unmanaged network switches in response to a command or instruction from a processor or controller using, for example, Simple Network Management Protocol (SNMP) or any other desired protocol.

In accordance with the determination (302) of a first power line loss or disruption, process 300 continues by selecting a second power line from the main power supply (or backup power supply) in the CGU to the power supply in the RWTU (303). The second power line can be selected from one or more redundant power lines. For example, a power supply in the RWTU can be configured to monitor (e.g., using a smart power switch) the power delivered from a main power supply in the CGU (e.g., monitoring current and/or voltage inputs/outputs), and if a loss or disruption of the first power line is detected, select the second power line for coupling with the power supply in the RWTU.

Process 300 continue by transferring data on the second data link or power on the second power line from the CGU to the RWTU (304).

While this document contains many specific implementation details, the implementation details are limited by the scope of the invention which is solely defined by the appended claims.

While logic flows or operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various software components in the embodiments described above should not be understood as requiring such separation in all embodiments, and it should be understood that the described software components can generally be integrated together in a single software program or multiple software programs.

In some instances, functions in claims will be preceded with the phrase "one or more." The phrase "one or more" as used herein includes a function being performed by one element, a function being performed by more than one element, e.g., in a distributed fashion, several functions being performed by one element, several functions being performed by several elements, or any combination of the above.

In some instances, claim elements will be preceded with the terms first, second, third and so forth. It should be understood that, although the terms first, second, third, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context."

Some aspects of the subject matter of this specification may include gathering and use of data available from various sources. The present disclosure contemplates that in some instances, this gathered data may identify a particular location or an address based on device usage. Such personal information data can include location-based data, addresses, subscriber account identifiers, or other identifying information. The present disclosure further contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure.

## Claims

1. A system comprising:
a communication gateway unit, CGU, (201) located at a first location of a vehicle, the CGU comprising:
a communication processor circuit (203);
a first power supply (206); and
a first data interface (204a);
a remote wireless transceiver unit, RWTU, (202) located at a second location of the vehicle, the RWTU (202) comprising:
a second data interface (204b) coupled to the first data interface (204a) using two or more data links;
a power interface (214) configured to couple the first power supply to the RWTU (202) using two or more power lines; and
one or more wireless transceivers (211, 212, 213) coupled to one or more antennas (215a-215c) on the vehicle, wherein the second location is closer to each of the one or more antennas than the first location; and
one or more storage devices storing instructions that, when executed by the communication processor circuit (203), cause the communication processor circuit (203) to:
monitor data traffic on a first data link between the first data interface (204a) and the second data interface (204b);
in response to a detection of a loss or a disruption of the first data link, select (303) a second data link to transfer data between the first data interface (204a) and the second data interface (204b).

2. The system of claim 1, wherein the loss or the disruption of the first data link comprises at least one of the first data interface (204a) no longer receiving data from the second data interface (204b) for a first specified period of time, a reduction in data transfer rate of the data traffic on the first data link, an increase in data error of the data traffic on the first data link, or a reduction in Quality of Service of the data traffic on the first data link.

3. The system of claim 1, the one or more storage devices storing instructions that, when executed by the communication processor circuit (203), further cause the communication processor circuit (203) to:
after the detection of a loss or a disruption of the first data link, and before the selection of a second data link to transfer data, verify the loss or the disruption of the first data link by causing test data to be transferred between the first data interface (204a) and the second data interface (204b); and
in response to the test data not being transferred, a data transfer rate below a first threshold, a data error above a second threshold, a Quality of Service below a third threshold, or a combination thereof, select the second data link to transfer data between the first data interface (204a) and the second data interface (204b).

4. The system of claim 1, wherein:
the second data interface (204b) is coupled to the first data interface (204a) using at least three data links; and
the second data link has a ranking criteria larger than the ranking criteria of a third data link.

5. The system of claim 4, wherein the ranking criteria comprises at least one of an availability, a bandwidth, or a data transfer rate.

6. The system of claim 1, the system further comprising a network switch, the network switch configured to switch from the first data link to the second data link in response to the selection (303) of the second data link by the communication processor circuit (203).

7. The system of claim 1, wherein the second location is underneath a roof of the vehicle.

8. The system of claim 1, the one or more storage devices storing instructions that, when executed by the communication processor circuit (203), further cause the communication processor circuit (203) to:
monitor, at the power interface (214), at least one of a current input, a current output, a voltage input, or a voltage output; and
in response to a detection of a loss or disruption of a first power line, select (303) a second power line to supply power from the first power supply to the RWTU (202).

9. A method comprising:
monitoring (301), by a communication processor circuit (203) of a vehicle, data traffic on a first data link of redundant data links between a communication gateway unit, CGU, (201) of the vehicle and a remote wireless transceiver unit, RWTU, (202) of the vehicle, the CGU (201) and RWTU (202) placed at different locations of the vehicle, the CGU (201) being located at a first location of the vehicle, the RWTU (202) being located at a second location of the vehicle, wherein the second location is closer to each of one or more antennas than the first location; and
in response to a detection of a loss or disruption of the first data link, selecting (303) by the communication processor-circuit a second data link of the redundant data links to transfer data between the CGU (201) and RWTU (202).

10. The method of claim 9, wherein the loss or the disruption of the first data link comprises at least one of CGU (201) no longer receiving data from the RWTU (202) for a first specified period of time, a reduction in data transfer rate of the data traffic on the first data link, an increase in data error of the data traffic on the first data link, or a reduction in Quality of Service of the data traffic on the first data link.

11. The method of claim 9, the method further comprising:
after the detection of a loss or a disruption of the first data link, and before selecting a second data link to transfer data, verifying the loss or the disruption of the first data link by causing test data to be transferred between the CGU (201) and the RWTU (202); and
in response to the test data not being transferred, a data transfer rate below a first threshold, a data error above a second threshold, a Quality of Service below a third threshold, or a combination thereof, selecting the second data link to transfer data between the CGU (201) and the RWTU (202).

12. The method of claim 9, wherein:
the RWTU (202) is coupled to the CGU (201) using at least three data links; and
the second data link has a ranking criteria larger than the ranking criteria of a third data link, wherein the ranking criteria comprises at least one of an availability, a bandwidth, or a data transfer rate.

13. The method of claim 9, wherein the vehicle includes a power interface (214) and redundant power lines between the CGU (201) and the RWTU (202), the method further comprising:
monitor, at the power interface (214), at least one of a current input, a current output, a voltage input, or a voltage output; and
in response to a detection of a loss or disruption of a first power line, select (303) a second power line to supply power from the CGU (201) to the RWTU (202).

14. A vehicle comprising:
one or more computer processors; and
one or more non-transitory storage media storing instructions that, when executed by the one or more computer processors, cause performance of the method of any of the preceding claims 9-13.

15. One or more non-transitory storage media storing instructions that, when executed by one or more computing devices, cause performance of any of the method of any of the preceding claims 9-13.

## Patentansprüche

1. System, umfassend:
eine Kommunikations-Gateway-Einheit, CGU, (201), die an einem ersten Ort eines Fahrzeugs angeordnet ist, wobei die CGU umfasst:
einen Kommunikationsprozessorschaltkreis (203);
eine erste Leistungsversorgung (206); und
eine erste Datenschnittstelle (204a);
eine entfernte Drahtlos-Transceiver-Einheit, RWTU, (202), die an einem zweiten Ort des Fahrzeugs angeordnet ist, wobei die RWTU (202) umfasst:
eine zweite Datenschnittstelle (204b), die unter Verwendung von zwei oder mehreren Datenverbindungen mit der ersten Datenschnittstelle (204a) gekoppelt ist;
eine Leistungsschnittstelle (214), die ausgestaltet ist, um die erste Leistungsversorgung unter Verwendung von zwei oder mehreren Leistungsleitungen mit der RWTU (202) zu koppeln; und
einen oder mehrere drahtlose Transceiver (211, 212, 213), der oder die mit einer oder mehreren Antennen (215a-215c) an dem Fahrzeug gekoppelt ist oder sind, wobei der zweite Ort näher an jeder der einen oder mehreren Antennen liegt als der erste Ort; und
eine oder mehrere Speichereinrichtungen, die Anweisungen speichert oder speichern, die bei einer Ausführung durch den Kommunikationsprozessorschaltkreis (203) bewirken, dass der Kommunikationsprozessorschaltkreis (203):
Datenverkehr an einer ersten Datenverbindung zwischen der ersten Datenschnittstelle (204a) und der zweiten Datenschnittstelle (204b) überwacht;
in Ansprechen auf eine Detektion eines Ausfalls oder einer Störung der ersten Datenverbindung eine zweite Datenverbindung zum Übermitteln von Daten zwischen der ersten Datenschnittstelle (204a) und der zweiten Datenschnittstelle (204b) auswählt (303).

2. System nach Anspruch 1, wobei der Ausfall oder die Störung der ersten Datenverbindung umfasst, dass die erste Datenschnittstelle (204a) für eine erste spezifizierte Zeitdauer keine Daten von der zweiten Datenschnittstelle (204b) mehr empfängt und/oder eine Reduzierung einer Datenübermittlungsrate des Datenverkehrs an der ersten Datenverbindung und/oder eine Erhöhung eines Datenfehlers des Datenverkehrs an der ersten Datenverbindung und/oder eine Reduzierung einer Dienstgüte des Datenverkehrs an der ersten Datenverbindung umfasst.

3. System nach Anspruch 1, wobei die eine oder die mehreren Speichereinrichtungen Anweisungen speichern, die bei einer Ausführung durch den Kommunikationsprozessorschaltkreis (203) ferner bewirken, dass der Kommunikationsprozessorschaltkreis (203):
nach der Detektion eines Ausfalls oder einer Störung der ersten Datenverbindung und vor der Auswahl einer zweiten Datenverbindung zum Übermitteln von Daten den Ausfall oder die Störung der ersten Datenverbindung verifiziert, indem bewirkt wird, dass Testdaten zwischen der ersten Datenschnittstelle (204a) und der zweiten Datenschnittstelle (204b) übermittelt werden sollen; und
in Ansprechen auf ein Nichtübermitteln der Testdaten, eine Datenübermittlungsrate unter einem ersten Schwellenwert, einen Datenfehler über einem zweiten Schwellenwert, eine Dienstgüte unter einem dritten Schwellenwert oder eine Kombination hiervon die zweite Datenverbindung auswählt, um Daten zwischen der ersten Datenschnittstelle (204a) und der zweiten Datenschnittstelle (204b) zu übermitteln.

4. System nach Anspruch 1, wobei:
die zweite Datenschnittstelle (204b) unter Verwendung von zumindest drei Datenverbindungen mit der ersten Datenschnittstelle (204a) gekoppelt ist; und
die zweite Datenverbindung ein Einstufungskriterium aufweist, das größer als das Einstufungskriterium einer dritten Datenverbindung ist.

5. System nach Anspruch 4, wobei das Einstufungskriterium eine Verfügbarkeit und/oder eine Bandbreite und/oder eine Datenübermittlungsrate umfasst.

6. System nach Anspruch 1, wobei das System ferner einen Netzschalter umfasst, wobei der Netzschalter ausgestaltet ist, um in Ansprechen auf die Auswahl (303) der zweiten Datenverbindung durch den Kommunikationsprozessorschaltkreis (203) von der ersten Datenverbindung auf die zweite Datenverbindung umzuschalten.

7. System nach Anspruch 1, wobei sich der zweite Ort unterhalb eines Dachs des Fahrzeugs befindet.

8. System nach Anspruch 1, wobei die eine oder die mehreren Speichereinrichtungen Anweisungen speichert oder speichern, die bei einer Ausführung durch den Kommunikationsprozessorschaltkreis (203) ferner bewirken, dass der Kommunikationsprozessorschaltkreis (203):
an der Leistungsschnittstelle (214) einen Stromeingang und/oder einen Stromausgang und/oder einen Spannungseingang und/oder einen Spannungsausgang überwacht; und
in Ansprechen auf eine Detektion eines Ausfalls oder einer Störung einer ersten Leistungsleitung eine zweite Leistungsleitung auswählt (303), um Leistung von der ersten Leistungsversorgung an die RWTU (202) zu liefern.

9. Verfahren, das umfasst, dass:
durch einen Kommunikationsprozessorschaltkreis (203) eines Fahrzeugs Datenverkehr an einer ersten Datenverbindung von redundanten Datenverbindungen zwischen einer Kommunikations-Gateway-Einheit, CGU, (201) des Fahrzeugs und einer entfernten Drahtlos-Transceiver-Einheit, RWTU, (202) des Fahrzeugs überwacht wird (301), wobei die CGU (201) und die RWTU (202) an unterschiedlichen Orten des Fahrzeugs angeordnet sind, wobei die CGU (201) an einem ersten Ort des Fahrzeugs angeordnet ist, wobei die RWTU (202) an einem zweiten Ort des Fahrzeugs angeordnet ist, und wobei der zweite Ort näher an jeder von einer oder mehreren Antennen liegt als der erste Ort; und
in Ansprechen auf eine Detektion eines Ausfalls oder einer Störung der ersten Datenverbindung durch den Kommunikationsprozessorschaltkreis eine zweite Datenverbindung der redundanten Datenverbindungen zum Übermitteln von Daten zwischen der CGU (201) und der RWTU (202) ausgewählt wird (303).

10. Verfahren nach Anspruch 9, wobei der Ausfall oder die Störung der ersten Datenverbindung umfasst, dass die CGU (201) für eine erste spezifizierte Zeitdauer keine Daten von der RWTU (202) mehr empfängt und/oder eine Reduzierung einer Datenübermittlungsrate des Datenverkehrs an der ersten Datenverbindung und/oder eine Erhöhung eines Datenfehlers des Datenverkehrs an der ersten Datenverbindung und/oder eine Reduzierung einer Dienstgüte des Datenverkehrs an der ersten Datenverbindung umfasst.

11. Verfahren nach Anspruch 9, wobei das Verfahren ferner umfasst, dass:
nach der Detektion eines Ausfalls oder einer Störung der ersten Datenverbindung und vor der Auswahl einer zweiten Datenverbindung zum Übermitteln von Daten der Ausfall oder die Störung der ersten Datenverbindung verifiziert wird, indem bewirkt wird, dass Testdaten zwischen der CGU (201) und der RWTU (202) übermittelt werden sollen; und
in Ansprechen auf ein Nichtübermitteln der Testdaten, eine Datenübermittlungsrate unter einem ersten Schwellenwert, einen Datenfehler über einem zweiten Schwellenwert, eine Dienstgüte unter einem dritten Schwellenwert oder eine Kombination hiervon die zweite Datenverbindung ausgewählt wird, um Daten zwischen der CGU (201) und der RWTU (202) zu übermitteln.

12. Verfahren nach Anspruch 9, wobei:
die RWTU (202) unter Verwendung von zumindest drei Datenverbindungen mit der mit der CGU (201) gekoppelt ist; und
die zweite Datenverbindung ein Einstufungskriterium aufweist, das größer als das Einstufungskriterium einer dritten Datenverbindung ist, wobei das Einstufungskriterium eine Verfügbarkeit und/oder eine Bandbreite und/oder eine Datenübermittlungsrate umfasst.

13. Verfahren nach Anspruch 9, wobei das Fahrzeug eine Leistungsschnittstelle (214) und redundante Leistungsleitungen zwischen der CGU (201) und der RWTU (202) umfasst, wobei das Verfahren ferner umfasst, dass:
an der Leistungsschnittstelle (214) ein Stromeingang und/oder ein Stromausgang und/oder ein Spannungseingang und/oder ein Spannungsausgang überwacht wird; und
in Ansprechen auf eine Detektion eines Ausfalls oder einer Störung einer ersten Leistungsleitung eine zweite Leistungsleitung ausgewählt wird (303), um Leistung von der CGU (201) an die RWTU (202) zu liefern.

14. Fahrzeug, umfassend:
einen oder mehrere Computerprozessoren; und
ein oder mehrere nicht-transitorische Speichermedien, das oder die Anweisungen speichert oder speichern, die bei einer Ausführung durch den einen oder die mehreren Computerprozessoren eine Durchführung des Verfahrens nach einem der vorstehenden Ansprüche 9-13 bewirken.

15. Ein oder mehrere nicht-transitorische Speichermedien, das oder die Anweisungen speichert oder speichern, die bei einer Ausführung durch eine oder mehrere Recheneinrichtungen eine Durchführung eines der Verfahren nach einem der vorstehenden Ansprüche 9-13 bewirken.

## Revendications

1. Système comprenant :
une unité passerelle de communication, CGU, (201) située à un premier emplacement d'un véhicule, la CGU comprenant :
un circuit processeur de communication (203) ;
une première alimentation électrique (206) ; et
une première interface de données (204a) ;
une unité d'émission-réception sans fil distante, RWTU, (202) située à un deuxième emplacement du véhicule, la RWTU (202) comprenant :
une deuxième interface de données (204b) couplée à la première interface de données (204a) en utilisant deux ou plusieurs liaisons de données ;
une interface d'alimentation (214) configurée pour coupler la première alimentation électrique à la RWTU (202) en utilisant deux ou plusieurs lignes d'alimentation ; et
un ou plusieurs émetteurs-récepteurs sans fil (211, 212, 213) couplés à une ou plusieurs antennes (215a-215c) sur le véhicule, le deuxième emplacement étant plus proche de chacune desdites une ou plusieurs antennes que le premier emplacement ; et
un ou plusieurs dispositifs de stockage stockant des instructions qui, lorsqu'elles sont exécutées par le circuit processeur de communication (203), amènent le circuit processeur de communication (203) à :
surveiller le trafic de données sur une première liaison de données entre la première interface de données (204a) et la deuxième interface de données (204b) ;
en réponse à une détection d'une perte ou d'une rupture de la première liaison de données, sélectionner (303) une deuxième liaison de données pour transférer des données entre la première interface de données (204a) et la deuxième interface de données (204b).

2. Système selon la revendication 1, dans lequel la perte ou la rupture de la première liaison de données comprend au moins l'un des cas suivants : la première interface de données (204a) ne reçoit plus de données de la deuxième interface de données (204b) pendant une première période de temps spécifiée, une réduction du taux de transfert de données du trafic de données sur la première liaison de données, une augmentation de l'erreur de données du trafic de données sur la première liaison de données ou une réduction de la qualité de service du trafic de données sur la première liaison de données.

3. Système selon la revendication 1, dans lequel lesdits un ou plusieurs dispositifs de stockage stockant des instructions qui, lorsqu'elles sont exécutées par le circuit processeur de communication (203), amènent en outre le circuit processeur de communication (203) à :
après la détection d'une perte ou d'une rupture de la première liaison de données, et avant la sélection d'une deuxième liaison de données pour transférer des données, vérifier la perte ou la rupture de la première liaison de données en effectuant un transfert de données de test entre la première interface de données (204a) et la deuxième interface de données (204b) ; et
en réponse à l'absence de transfert des données de test, à un taux de transfert de données inférieur à un premier seuil, à une erreur de données supérieure à un deuxième seuil, à une qualité de service inférieure à un troisième seuil ou à une combinaison de ceux-ci, sélectionner la deuxième liaison de données pour transférer des données entre la première interface de données (204a) et la deuxième interface de données (204b).

4. Système selon la revendication 1, dans lequel :
la deuxième interface de données (204b) est couplée à la première interface de données (204a) en utilisant au moins trois liaisons de données ; et
la deuxième liaison de données a un critère de classement supérieur au critère de classement d'une troisième liaison de données.

5. Système selon la revendication 4, dans lequel le critère de classement comprend au moins un critère parmi une disponibilité, une largeur de bande ou un taux de transfert de données.

6. Système selon la revendication 1, le système comprenant en outre un commutateur de réseau, le commutateur de réseau étant configuré pour passer de la première liaison de données à la deuxième liaison de données en réponse à la sélection (303) de la deuxième liaison de données par le circuit processeur de communication (203).

7. Système selon la revendication 1, dans lequel le deuxième emplacement est situé sous un toit du véhicule.

8. Système selon la revendication 1, dans lequel lesdits un ou plusieurs dispositifs de stockage stockent des instructions qui, lorsqu'elles sont exécutées par le circuit processeur de communication (203), amènent en outre le circuit processeur de communication (203) à :
surveiller, à l'interface d'alimentation (214), au moins un élément parmi une entrée de courant, une sortie de courant, une entrée de tension ou une sortie de tension ; et
en réponse à une détection d'une perte ou d'une rupture d'une première ligne d'alimentation, sélectionner (303) une deuxième ligne d'alimentation pour alimenter la RWTU (202) à partir de la première alimentation électrique.

9. Procédé comprenant les étapes consistant à :
surveiller (301), par un circuit processeur de communication (203) d'un véhicule, le trafic de données sur une première liaison de données parmi des liaisons de données redondantes entre une unité passerelle de communication, CGU, (201) du véhicule et une unité d'émission-réception sans fil distante, RWTU, (202) du véhicule, la CGU (201) et la RWTU (202) étant placées à des emplacements différents du véhicule, la CGU (201) étant située à un premier emplacement du véhicule, la RWTU (202) étant située à un deuxième emplacement du véhicule, le deuxième emplacement étant plus proche de chacune d'une ou plusieurs antennes que le premier emplacement ; et
en réponse à une détection d'une perte ou d'une rupture de la première liaison de données, sélectionner (303) par le circuit processeur de communication une deuxième liaison de données parmi les liaisons de données redondantes pour transférer des données entre la CGU (201) et la RWTU (202).

10. Procédé selon la revendication 9, dans lequel la perte ou la rupture de la première liaison de données comprend au moins l'un des cas suivants : la CGU (201) ne reçoit plus de données de la RWTU (202) pendant une première période de temps spécifiée, une réduction du débit de transfert de données du trafic de données sur la première liaison de données, une augmentation de l'erreur de données du trafic de données sur la première liaison de données ou une réduction de la qualité de service du trafic de données sur la première liaison de données.

11. Procédé selon la revendication 9, le procédé comprenant en outre les étapes consistant à :
après la détection d'une perte ou d'une rupture de la première liaison de données, et avant la sélection d'une deuxième liaison de données pour transférer des données, vérifier la perte ou la rupture de la première liaison de données en effectuant un transfert de données de test entre la CGU (201) et la RWTU (202) ; et
en réponse à l'absence de transfert des données de test, à un taux de transfert de données inférieur à un premier seuil, à une erreur de données supérieure à un deuxième seuil, à une qualité de service inférieure à un troisième seuil ou à une combinaison de ceux-ci, sélectionner la deuxième liaison de données pour transférer des données entre la CGU (201) et la RWTU (202).

12. Procédé selon la revendication 9, dans lequel :
la RWTU (202) est couplé à la CGU (201) en utilisant au moins trois liaisons de données ; et
la deuxième liaison de données a un critère de classement supérieur au critère de classement d'une troisième liaison de données, le critère de classement comprenant au moins un critère parmi une disponibilité, une largeur de bande ou un taux de transfert de données.

13. Procédé selon la revendication 9, dans lequel le véhicule inclut une interface d'alimentation (214) et des lignes d'alimentation redondantes entre la CGU (201) et la RWTU (202), le procédé comprenant en outre les étapes consistant à :
surveiller, à l'interface d'alimentation (214), au moins un élément parmi une entrée de courant, une sortie de courant, une entrée de tension ou une sortie de tension ; et
en réponse à une détection d'une perte ou d'une rupture d'une première ligne d'alimentation, sélectionner (303) une deuxième ligne d'alimentation pour alimenter la RWTU (202) à partir de la CGU (201).

14. Véhicule comprenant :
un ou plusieurs processeurs d'ordinateur ; et
un ou plusieurs supports de stockage non transitoires stockant des instructions qui, lorsqu'elles sont exécutées par lesdits un ou plusieurs processeurs d'ordinateur, entraînent la mise en œuvre du procédé selon l'une quelconque des revendications précédentes 9 à 13.

15. Un ou plusieurs supports de stockage non transitoires stockant des instructions qui, lorsqu'elles sont exécutées par un ou plusieurs dispositifs informatiques, entraînent la mise en œuvre du procédé selon l'une quelconque des revendications précédentes 9 à 13.
